# EUROPEAN PATENT SPECIFICATION

(11) **EP 1 716 987 B1**
(45) Date of publication and mention of the grant of the patent: **17.06.2009**
(21) Application number: 06112535.7
(22) Date of filing: 12.04.2006
(51) Int. Cl.: B27B 27/04, B27B 27/08, B23D 45/04

(54) **Fence arrangement for a miter saw**
Anordnung eines Anschlages für eine Gehrungssäge
Dispositif de butée pour scie à onglet

(30) Priority: 25.04.2005 US 674634 P
(43) Date of publication of application: 02.11.2006
(73) Proprietor: Black & Decker Inc., Newark, Delaware 19711 (US)
(72) Inventor: Meredith, Daryl, Hampstead, MD 21074 (US); Oktavec, Craig, Forest Hill, MD 21050 (US); Kaye Jr, Thomas, Bel Air, MD 21014 (US); Wattenbach, Brian, Menomonee Falls, WI 53051 (US); Bean, Frederick, Finksburg, MD 21048 (US)
(74) Representative: Bell, Ian Stephen

(56) References cited:
- EP-A- 1 340 603
- US-A- 3 821 918
- US-A- 5 297 463
- US-A1- 2003 228 197

## Description

This application derives priority from US Application No. 60/674,634, filed April 25, 2005.

This invention relates to a miter saw according to the preamble of claim 1. Such a miter saw is known from US 5,297,463.

It is well known to provide fences on miter saws for supporting a workpiece disposed thereagainst. The fences may include a fixed portion and a slidable portion slidably disposed on the fixed portion, as disclosed in US Patent Nos. 5,297,463 and 5,943,931. Further examples of the prior art are disclosed in US2003/228197, US3821918 and EP1340603.

It is desirable to improve such fences.

According to the present invention there is provided a miter saw according to claim 1.

Additional features and benefits of the present invention are described, and will be apparent from, the accompanying drawings and the detailed description below.

The accompanying drawings illustrate preferred embodiments of the invention according to the practical application of the principles thereof, and in which:
FIG. 1 is a side view of a first slide miter saw;
FIG. 2 is a side view of a second slide miter saw;
FIG. 3 is a side view of a first embodiment of the fence arrangement according to the invention; and
FIG. 4 is a partial side view of a second embodiment of the fence arrangement according to the invention.

The invention is now described with reference to the accompanying figures, wherein like numerals designate like parts. The present invention can be incorporated into miter saws, chop saws, compound miter saws, slide miter saws, etc. For the sake of convenience, the present invention will be described as applied to a slide miter saw. Nonetheless, persons skilled in the art shall recognize the applicability of the present invention to other power tools.

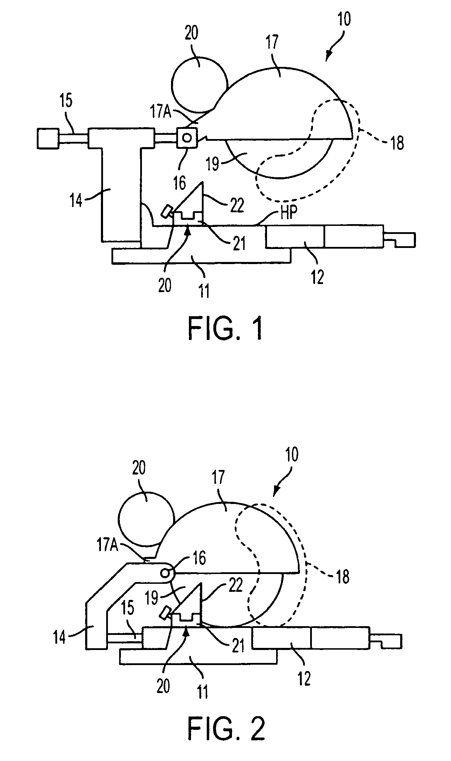

Referring to FIGS. 1-2, slide miter saws 10 have a base 11, a rotatable table 12 attached to the base 11, and a saw assembly which comprises a trunnion 16, a pivot arm 17A pivotably attached to trunnion 16, a motor 20A, a blade 19 driven by the motor 20A, an upper blade guard 17 for covering an upper part of blade 19, and a lower blade guard 18 pivotally attached to the upper blade guard 17 for covering a lower part of blade 19. Motor 20A is typically attached to the upper blade guard 17.

The slide miter saws 10 may also have a movable fence assembly 20 attached to the base 11. Movable fence assembly 20 preferably extends laterally across table 12, against which a workpiece can be positioned and supported for performing a cutting operation thereon. Movable fence assembly 20 preferably includes a fixed fence 21 attached to base 11, and a movable fence 22 connected to the fixed fence 21. Movable fence 22 may be slidably attached to fixed fence 21. Persons skilled in the art are referred to US Patent Nos. 5,297,463 and 5,943,931 for further information on such movable fence assemblies.

Slide miter saws 10 may also have a mechanism to enable the user to move the saw assembly horizontally along the table 12. Referring to FIG. 1, slide miter saw 10 accomplish this by connecting the saw assembly to at least one rail 15, which is slidably attached to a support housing 14 connected to the table 11 (see, e.g., US Patent No. 6,067,885,).

Alternatively, at least one rail 15 may be slidably connected to table 12, as shown in FIG. 2. Support housing 14 is then fixedly attached to the rail(s) 15. In addition, support housing 14 is attached to trunnion 16. See, e.g., US Patent No. 5,054,352.

Another arrangement is disclosed in US Patent No. 5,862,732, where rail 15 is fixedly attached to table 12, and support housing 14 (and the saw assembly) slide along rail 15.

With such arrangements, the user would pull the saw assembly forwardly, move the saw assembly downwardly, then push the saw assembly rearwardly for cutting the workpiece.

Referring to FIGS. 1-3, movable fence 22 and/or fixed fence 21 define a fence plane FP for supporting a workpiece. Preferably, fixed fence 21 and movable fence 22 are substantially coplanar. Fence plane FP is preferably substantially vertical.

In addition, base 11 and/or table 12 define a horizontal plane HP for supporting the workpiece. Preferably, base 11 and table 12 are substantially coplanar.

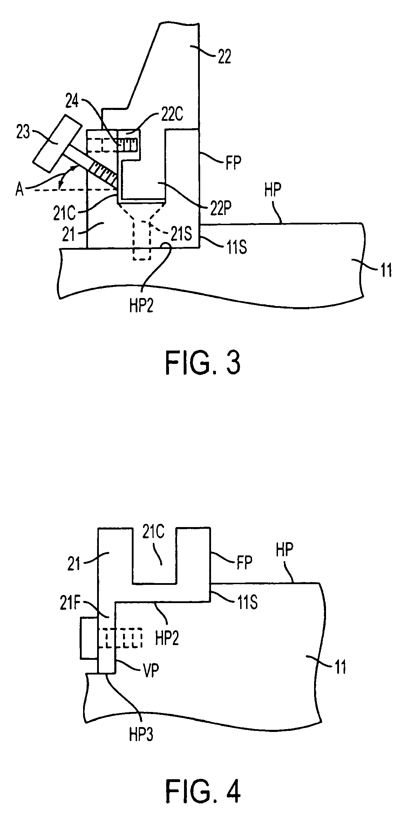

Referring to FIG. 3, base 11 preferably defines a second horizontal plane HP2, disposed below horizontal plane HP. A shoulder 11S may be disposed between horizontal planes HP, HP2. Fixed fence 21 is preferably disposed on the second horizontal plane HP2 and/or against shoulder 11S. At least one screw 21 S may be used to affix fixed fence 21 to base 11. Screw(s) 21 S are preferably countersunk into fixed fence 21.

Persons skilled in the art will recognize that screw(s) 21S in FIG. 3 have a substantially vertical axis. FIG. 4 illustrates a second embodiment of movable fence assembly 20, where like numerals refer to like parts. The only major difference between the first and second embodiments is that fixed fence 21 may have a downwardly-extending flange 21 F. Preferably flange 21 F extends substantially vertically and contacts base 11 along a substantially vertical plane VP and/or a horizontal plane HP3. At least one screw 21 S may extend through flange 21 F and threadingly engage base 11.

Referring to FIG. 3, movable fence 22 may be slidably disposed on fixed fence 21. Preferably, movable fence 22 has a downwardly-extending protrusion 22P extending into a channel 21C formed by fixed fence 21.

The user can move movable fence 22 along fixed fence 21. In order to lock the position of movable fence 22 relative to fixed fence 21, the user would rotate a lock screw 23, which pushes protrusion 22P into locking contact with fixed fence 21.

The longitudinal axis of screw 23 may be inclined relative to horizontal plane HP and/or fence plane FP. The angle A between the longitudinal axis of screw 23 and horizontal plane HP may be between about 5 degrees and about 25 degrees. Preferably, angle A is about 10 degrees.

Preferably a channel 22C is created in protrusion 22P. A set screw 24 may be disposed in fixed fence 21 and extend into channel 22C. Persons skilled in the art will recognize that set screw 24 may be replaced by a protrusion in fixed fence 21. With such arrangement, movable fence 22 may not be removed from fixed fence 21 by lifting movable fence 22 vertically.

## Claims

1. A miter saw comprising:
a base (11) having a first substantially horizontal surface (HP) for supporting a workpiece and a second substantially horizontal surface (HP2) disposed below the first surface;
a table (12) rotatably attached to the base, the table being substantially coplanar with the first surface;
a saw assembly (17, 18, 19, 20A) pivotably attached to the table, the saw assembly comprising a motor (20A), and a blade (19) driven by the motor; and
a fence (20) assembly attached to the base, the fence assembly comprising a fixed fence (21) fixedly attached to the base, **characterised in that** said fixed fence is disposed on the second surface.

2. The miter saw of Claim 1, wherein the saw assembly further comprises a trunnion (16), a pivot arm (17A) pivotally attached to the trunnion, and an upper blade guard (17) connected to the pivot arm.

3. The miter saw of Claim 2, wherein the motor (20A) is attached to the upper blade guard (17).

4. The miter saw of Claim 2, wherein the trunnion (16) is attached to at least one rail (15) slidingly connected to the table (12).

5. The miter saw of Claim 1, wherein the saw assembly further comprises a trunnion (16) pivotally attached to the table (12), at least one rail (15) slidingly connected to the trunnion, a pivot arm (17A) pivotally attached to the at least one rail, and an upper blade guard (17) connected to the pivot arm.

6. The miter saw of Claim 5, wherein the motor (20A) is attached to the upper blade guard (17).

7. The miter saw of Claim 1, further comprising a movable fence (22) disposed on fixed fence (21) that is movable relative to the fixed fence.

8. The miter saw of Claim 7, wherein the movable fence (22) slides relative to the fixed fence (21).

9. The miter saw of Claim 7, wherein the movable fence (22) has a first substantially vertical workpiece-supporting plane.

10. The miter saw of Claim 9, wherein the fixed fence (21) has a second substantially vertical workpiece-supporting plane (FP) that is substantially coplanar with the first workpiece-supporting plane.

11. The miter saw of Claim 7, wherein the movable fence (22) is lockable in position relative to the fixed fence by a screw (23).

12. The miter saw of Claim 11, wherein the screw (23) is inclined relative to at least one of the first workpiece-supporting plane and the first substantially horizontal surface.

13. The miter saw of Claim 12, wherein the screw (23) is inclined relative to the first substantially horizontal surface at an angle (A) between about 5 degrees and about 25 degrees.

14. The miter saw of Claim 7, wherein the movable fence (22) has a downwardly-extending protrusion (22P) received within a channel (22C) of the fixed fence (21).

15. The miter saw of Claim 14, wherein a fixed fence protrusion (24) extends from the fixed fence (21) and into the channel (22C), so that the fixed fence protrusion is disposed above the protrusion (22P) of the movable fence (22).

16. The miter saw of Claim 15, wherein the fixed fence protrusion (24) is a set screw.

17. The miter saw Claim 1, wherein the fixed fence (21) has a downwardly-extending protrusion (21 F) that contacts a substantially vertical surface (VP) of the base (11).

18. The miter saw of Claim 17, wherein a screw extends through the downwardly-extending protrusion (21 F) of the fixed fence (21) and threadingly engages the base (11).

## Patentansprüche

1. Gehrungssäge mit
einer Basis (11) mit einer ersten, im Wesentlichen horizontalen Oberfläche (HP) zum Halten eines Werkstücks und einer zweiten, im Wesentlichen horizontalen Oberfläche (HP2), die unter der ersten Oberfläche angeordnet ist,
einem Tisch (12), der drehbar an der Basis angebracht ist, wobei der Tisch im Wesentlichen koplanar zu der ersten Oberfläche angeordnet ist,
einer Sägeanordnung (17, 18, 19, 20A), die schwenkbar an dem Tisch angebracht ist, wobei die Sägeanordnung einen Motor (20A) und ein von dem Motor angetriebenes Blatt (19) aufweist, und
einer Anschlaganordnung (20), die an der Basis angebracht ist, wobei die Anschlaganordnung einen festen Anschlag (21), der fest an der Basis angebracht ist, aufweist, **dadurch gekennzeichnet, dass** der feste Anschlag an der zweiten Oberfläche angeordnet ist.

2. Gehrungssäge nach Anspruch 1, wobei die Sägeanordnung ferner einen Zapfen (16), einen Schwenkarm (17A), der schwenkbar an dem Zapfen angebracht ist, und eine obere Sägeblattschutzhaube (17) aufweist, die mit dem Schwenkarm verbunden ist.

3. Gehrungssäge nach Anspruch 2, wobei der Motor (20A) an der oberen Sägeblattschutzhaube (17) angebracht ist.

4. Gehrungssäge nach Anspruch 2, wobei der Zapfen (16) an zumindest einer Schiene (15) angebracht ist, die verschiebbar mit dem Tisch (12) verbunden ist.

5. Gehrungssäge nach Anspruch 1, wobei die Sägeanordnung ferner einen schwenkbar am Tisch (12) angebrachten Zapfen (16), wenigstens eine Schiene (15), die verschiebbar mit dem Zapfen verbunden ist, einen schwenkbar an der wenigstens einen Schiene angebrachten Schwenkbarm (17A) und eine mit dem Schwenkarm verbundene obere Sägeblattschutzhaube (17) aufweist.

6. Gehrungssäge nach Anspruch 5, wobei der Motor (20A) an der oberen Sägeblattschutzhaube (17) angebracht ist.

7. Gehrungssäge nach Anspruch 1, ferner mit einem beweglichen Anschlag (22), der an dem festen Anschlag (21) angeordnet ist und relativ zu dem festen Anschlag beweglich ist.

8. Gehrungssäge nach Anspruch 7, wobei der bewegliche Anschlag (22) relativ zu dem festen Anschlag (21) verschiebbar ist.

9. Gehrungssäge nach Anspruch 7, wobei der bewegliche Anschlag (22) eine erste, im Wesentlichen vertikale Werkstückhalteebene aufweist.

10. Gehrungssäge nach Anspruch 9, wobei der feste Anschlag (21) eine zweite, im Wesentlichen vertikale Werkstückhalteebene (FP) aufweist, die im Wesentlichen koplanar zu der ersten Werkstückhalteebene ist.

11. Gehrungssäge nach Anspruch 7, wobei der bewegliche Anschlag (22) in einer Stellung relativ zu dem festen Anschlag durch eine Schraube (23) verriegelbar ist.

12. Gehrungssäge nach Anspruch 11, wobei die Schraube (23) in Bezug auf wenigstens eine aus der ersten Werkstückhalteebene und der ersten im Wesentlichen horizontalen Oberfläche geneigt ist.

13. Gehrungssäge nach Anspruch 12, wobei die Schraube (23) in Bezug auf die erste, im Wesentlichen horizontale Oberfläche unter einem Winkel (A) zwischen etwa 5 Grad und etwa 25 Grad geneigt ist.

14. Gehrungssäge nach Anspruch 7, wobei der bewegliche Anschlag (22) einen nach unten vorstehenden Vorsprung (22P) aufweist, der in einer Nut (22C) des festen Anschlags (21) aufgenommen ist.

15. Gehrungssäge nach Anspruch 14, wobei ein Vorsprung (24) des festen Anschlags sich von dem festen Anschlag (21) in die Nut (22C) erstreckt, so dass der Vorsprung des festen Anschlags über dem Vorsprung (22P) des beweglichen Anschlags (22) angeordnet ist.

16. Gehrungssäge nach Anspruch 15, wobei der Vorsprung (24) des festen Anschlags eine Madenschraube ist.

17. Gehrungssäge nach Anspruch 1, wobei der feste Anschlag (21) einen sich nach unten erstreckenden Vorsprung (21F) aufweist, der eine im Wesentlichen vertikale Fläche (VP) der Basis (11) berührt.

18. Gehrungssäge nach Anspruch 17, wobei sich eine Schraube durch den sich nach unten erstreckenden Vorsprung (21F) des festen Anschlags (21) erstreckt und in Gewindeeingriff mit der Basis (11) ist.

## Revendications

1. Scie à onglet comprenant :
une base (11) qui présente une première surface sensiblement horizontale (HP) pour supporter une pièce à travailler et une seconde surface sensiblement horizontale (HP2) disposée sous la première surface ;
une table (12) fixée de manière rotative sur la base, la table étant sensiblement coplanaire avec la première surface ;
un ensemble de scie (17, 18, 19, 20A) fixé de manière pivotante sur la table, l'ensemble de scie comprenant un moteur (20A), et une lame (19) entraînée par le moteur ; et
un ensemble de guide (20) fixé sur la base, l'ensemble de guide comprenant un guide fixe (21) attaché de manière fixe à la base, **caractérisé en ce que** ledit guide fixe est disposé sur la seconde surface.

2. Scie à onglet selon la revendication 1, dans laquelle l'ensemble de scie comprend en outre un tourillon (16), un bras de pivot (17A) fixé de manière pivotante sur le tourillon, et une protection de lame supérieure (17) reliée au bras de pivot.

3. Scie à onglet selon la revendication 2, dans laquelle le moteur (20A) est fixé sur la protection de lame supérieure (17).

4. Scie à onglet selon la revendication 2, dans laquelle le tourillon (16) est fixé sur un ou plusieurs rails (15) reliés de manière coulissante à la table (12).

5. Scie à onglet selon la revendication 1, dans laquelle l'ensemble de scie comprend en outre un tourillon (16) fixé de manière pivotante sur la table (12), un ou plusieurs rails (15) reliés de manière coulissante au tourillon, un bras de pivot (17A) fixé de manière pivotante au(x) rail(s), et une protection de lame supérieure (17) reliée au bras de pivot.

6. Scie à onglet selon la revendication 5, dans laquelle le moteur (20A) est fixé sur la protection de lame supérieure (17).

7. Scie à onglet selon la revendication 1, comprenant en outre un guide mobile (22) disposé sur le guide fixe (21) et qui est mobile par rapport au guide fixe.

8. Scie à onglet selon la revendication 7, dans laquelle le guide mobile (22) coulisse par rapport au guide fixe (21).

9. Scie à onglet selon la revendication 7, dans laquelle le guide mobile (22) présente un premier plan de support de pièce à travailler sensiblement vertical.

10. Scie à onglet selon la revendication 9, dans laquelle le guide fixe (21) présente un second plan de support de pièce à travailler sensiblement vertical (FP) qui est sensiblement coplanaire avec le premier plan de support de pièce à travailler.

11. Scie à onglet selon la revendication 7, dans laquelle le guide mobile (22) peut être verrouillé dans une position par rapport au guide fixe à l'aide d'une vis (23).

12. Scie à onglet selon la revendication 11, dans laquelle la vis (23) est inclinée par rapport au premier plan de support de pièce à travailler et / ou à la première surface sensiblement horizontale.

13. Scie à onglet selon la revendication 12, dans laquelle la vis (23) est inclinée par rapport à la première surface sensiblement horizontale sous un angle (A) compris entre 5 degrés environ et 25 degrés environ.

14. Scie à onglet selon la revendication 7, dans laquelle le guide mobile (22) présente une saillie qui s'étend vers le bas (22P) et qui est reçue à l'intérieur d'une rainure (22C) du guide fixe (21).

15. Scie à onglet selon la revendication 14, dans laquelle une saillie de guide fixe (24) s'étend à partir du guide fixe (21) et dans la rainure (22C), de telle sorte que la saillie de guide fixe soit disposée au-dessus de la saillie (22P) du guide mobile (22).

16. Scie à onglet selon la revendication 15, dans laquelle la saillie de guide fixe (24) est une vis de réglage.

17. Scie à onglet selon la revendication 1, dans laquelle le guide fixe (21) présente une saillie (21F) qui s'étend vers le bas et qui est en contact avec une surface sensiblement verticale (VP) de la base (11).

18. Scie à onglet selon la revendication 17, dans laquelle une vis s'étend à travers la saillie (21F) qui s'étend vers le bas du guide fixe (21) et vient en prise par vissage avec la base (11).
